Europäisches Patentamt

**European Patent Office**

**Office européen des brevets**

(19)

(11) Numéro de publication: **0 116 011**
**B1**

# (12) FASCICULE DE BREVET EUROPÉEN

(45) Date de publication du fascicule du brevet:
22.07.87

(51) Int. Cl.⁴: **G 01 J 3/52**

(21) Numéro de dépôt: **84810005.3**

(22) Date de dépôt: **06.01.84**

(54) **Procédé pour reproduire au moins une surface colorée et dispositif pour la mise en oeuvre de ce procédé.**

(30) Priorité: **10.01.83 CH 109/83**

(43) Date de publication de la demande:
**15.08.84 Bulletin 84/33**

(45) Mention de la délivrance du brevet:
**22.07.87 Bulletin 87/30**

(84) Etats contractants désignés:
**AT BE CH DE FR GB IT LI LU NL SE**

(56) Documents cité:
**FR-A-1 544 670**
**US-A-2 233 255**

**Le dossier contient des informations techniques présentées postérieurement au dépôt de la demande et ne figurant pas dans le présent fascicule.**

(73) Titulaire: **Lamere, Jean- Claude, Villaret, CH- 1411 Essertines/Yverdon (CH)**

(72) Inventeur: **Lamere, Jean- Claude, Villaret, CH- 1411 Essertines/Yverdon (CH)**

(74) Mandataire: **Nithardt, Roland, CABINET ROLAND NITHARDT Rue Edouard Verdan 15, CH- 1400 Yverdon (CH)**

## Description

La présente invention concerne un procédé pour reproduire au moins une surface colorée dont la couleur correspond à une référence sélectionnée sur un nuancier, cette surface colorée étant obtenue par synthèse contrôlée de couleurs sur une émulsion photographique donnée.

Elle concerne également un dispositif pour la mise en oeuvre de ce procédé.

Dans les arts graphiques et notamment dans le domaine de la publicité, on est souvent amené à reproduire une ou plusieurs surfaces colorées dont la couleur est choisie sur un nuancier mis à la disposition du client. Jusqu'à ce jour, ces nuanciers étaient réalisés par des procédés classiques d'impression, de sorte que la surface colorée, réalisée sur émulsion photographique, ne correspondait pas à la couleur sélectionnée sur le nuancier. D'autre part, on sait que la couleur sur un document photographique dépend à la fois de l'émulsion et des produits de traitement, et que les caractéristiques de ces produits de traitement évoluent dans le temps et en fonction de leur utilisation. Par conséquent, même si la couleur du nuancier pouvait, dans certaines conditions, être reproduite de façon relativement fidèle, une telle reproduction était aléatoire puisqu'elle dépendait de paramètres qu'on ne contrôlait pas d'une manière absolue.

La présente invention se propose de pallier les inconvénients susmentionnés en proposant un procédé pour reproduire de façon réitérée des surfaces colorées dont les teintes correspondent exactement aux teintes sélectionnées sur un nuancier, ce qui permet de réaliser des compositions photographiques correspondant, après développement, à ce que l'opérateur avait choisi au montage d'une maquette.

Dans ce but, le procédé selon l'invention est défini et décrit par la revendication 1.

Le dispositif pour la mise en oeuvre de ce procédé est défini par la revendication 6.

La présente invention sera mieux comprise en référence à des descriptions d'un exemple de réalisation du dispositif utilisé et de son fonctionnement, ainsi qu'au dessin annexé dans lequel:

la figure 1 représente une vue schématique du dispositif selon l'invention, et

la figure 2 représente une vue d'un des masques pouvant être utilisés pour la réalisation du sensitogramme.

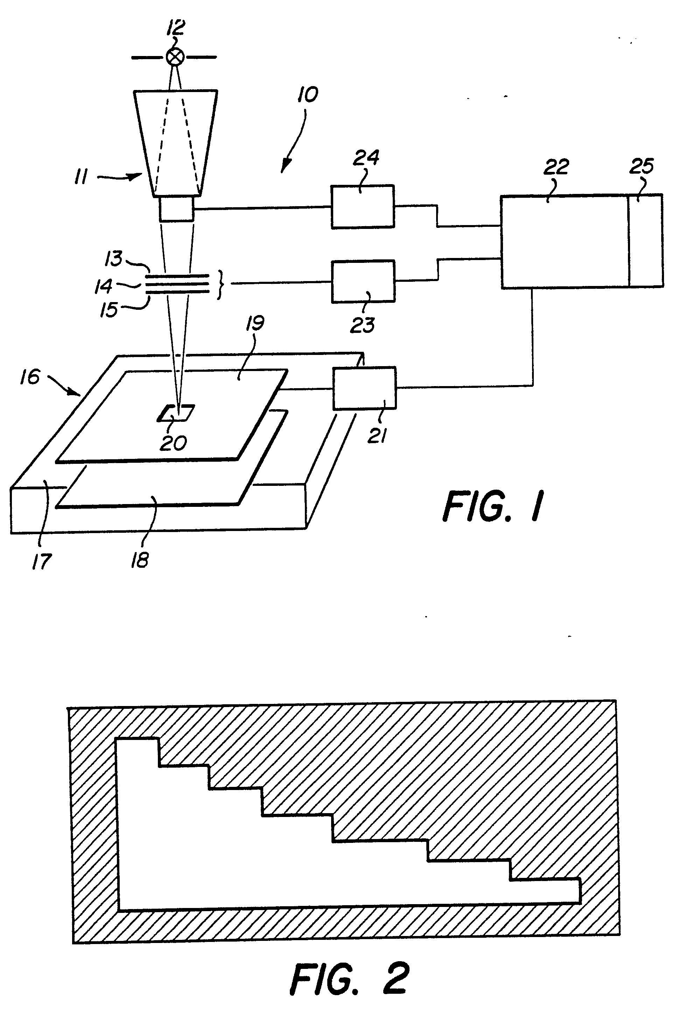

En référence à la fig. 1, le dispositif décrit 10 comporte une unité d'exposition 11 équipée de trois sources lumineuses correspondant à trois couleurs primaires. Ces trois sources peuvent être constituées d'une source de lumière blanche 12 et de trois filtres colorés 13, 14, 15 correspondant aux trois couleurs primaires. Elles peuvent également être constituées de trois sources colorées. Les couleurs primaires peuvent être choisies d'une manière connue en soi et sont de préférence le jaune, le magenta et le cyan ou le bleu, le vert et le rouge.

Par ailleurs, ce dispositif comporte un sensitomètre 16 placé sous l'unité d'exposition 11, ce sensitomètre étant équipé d'un plateau 17 horizontal prévu pour porter le substrat 18 revêtu de l'émulsion photographique.

Selon un premier mode de réalisation, un masque 19, constitué par une plaque rectangulaire opaque dans laquelle a été découpée une fenêtre 20 ayant par exemple une forme rectangulaire, est relié à un mécanisme d'entraînement 21 agencé pour déplacer séquentiellement le masque par rapport au substrat 18.

Selon un autre mode de réalisation, le masque 19 est fixe et le plateau 17 portant le substrat 18 peut être déplacé séquentiellement.

Dans les deux cas, le but de ces déplacements relatifs s'effectuant selon deux axes orthogonaux est d'exposer des plages successives de l'émulsion photographique à travers le masque, de manière à réaliser le sensitogramme composé par exemple de trois lignes superposées de plages rectangulaires dont chacune correspond à une nuance plus ou moins claire d'une des couleurs primaires. Ces déplacements relatifs du masque du substrat portant l'émulsion sont de préférence commandés par l'unité centrale 22 qui sélectionne également les filtres 13, 14 et 15 au moyen d'un mécanisme d'entraînement 23 et la durée de l'exposition, par exemple au moyen d'un mécanisme de commande 24 agissant sur un obturateur. Il est bien entendu que l'obturateur mécanique peut être remplacé par tout autre dispositif approprié permettant de régler la durée de l'exposition. Le sensitogramme obtenu après développement tient compte à la fois des caractéristiques de l'émulsion photographique et de celles des produits de développement, et constitue en quelque sorte une carte d'identité de l'émulsion et des bains de développement.

La phase suivante consiste à effectuer l'analyse densitométrique des couleurs du sensitogramme au moyen d'un densitomètre, pour définir un fichier analytique des couleurs du sensitogramme pour l'émulsion photographique et pour les produits de développement utilisés. Le fichier analytique est enregistré dans une mémoire de l'unité centrale de commande.

Selon un autre procédé de réalisation du sensitogramme, on utilise un masque à ouverture échelonnée tel que représenté par la fig. 2, que l'on déplace de façon continue par rapport au substrat. Cette ouverture, dont la forme est sensiblement celle d'un triangle rectangle dont l'hypoténuse représente un escalier à marches de longueur variable, est utilisée pour effectuer au moins trois luminations à l'aide des trois couleurs primaires définies précédemment. Il est bien entendu que l'on pourrait également maintenir fixe le masque et déplacer le substrat.

Pour reproduire une surface colorée dont la couleur correspond à une référence sélectionnée d'un nuancier préalablement réalisé sur une émulsion photographique identique à celle qui sera utilisée pour reproduire cette couleur, l'opérateur introduit, dans l'unité centrale de commande, les références de la couleur sélectionnée sur le nuancier à l'aide d'un clavier 25. Cette unité est programmée de telle manière qu'elle détermine les conditions d'exposition de l'émulsion photographique utilisée, en tenant compte des données du fichier analytique préalablement mis en mémoire. Cette unité est de préférence agencée pour effectuer automatiquement les luminations appropriées dans les trois couleurs primaires pour reproduire, après développement, la surface colorée dont la couleur correspond à celle sélectionnée par le nuancier.

Ce dispositif entièrement automatique pourrait également être remplacé par un dispositif semi-automatique, dans lequel l'unité centrale de commande affiche les données nécessaires pour que l'opérateur puisse commander manuellement les luminations requises pour reproduire la couleur sélectionnée.

En outre, le principe décrit ci-dessus peut également s'appliquer aux supports de reproductions photographiques à émulsion solide connus en soi, constitués par un substrat sur lequel on applique successivement trois films solides d'une émulsion correspondant chacun à une des couleurs primaires.

## Revendications

1. Procédé pour reproduire, par synthèse contrôlée de couleurs sur une émulsion photographique donnée, au moins une surface colorée dont la couleur correspond à une référence sélectionnée sur un nuancier, caractérisé en ce que, au cours d'une première étape, on enregistre sur une émulsion photographique identique à ladite émulsion photographique donnée, un sensitogramme développé au moyen de produits de développement de caractéristiques déterminées et on effectue une analyse densitométrique de ce sensitogramme de façon à établir un fichier analytique des couleurs composant le sensitogramme pour ladite émulsion et lesdits produits de développement et en ce que, au cours d'une seconde étape, on détermine, sur la base de ladite référence sélectionnée sur le nuancier et des résultats de ladite analyse densitométrique du sensitogramme, les conditions d'exposition de ladite émulsion photographique donnée pour reproduire ladite surface colorée.

2. Procédé selon la revendication 1, caractérisé en ce que l'on réalise le sensitogramme par exposition à temps variable.

3. Procédé selon la revendication 1, caractérisé en ce que l'on réalise le sensitogramme en exposant l'émulsion photographique à une source lumineuse émettant une lumière correspondant à une parmi trois couleurs primaires à travers l'ouverture d'un masque, dont la forme correspond à celle d'une plage du sensitogramme pour effectuer au moins une lumination, pour réaliser une première plage de couleur, et en ce que l'on déplace séquentiellement le masque ou l'émulsion en variant la lumination et le choix de la ou des couleurs primaires pour réaliser les plages de couleurs successives du sensitogramme.

4. Procédé selon la revendication 1, caractérisé en ce que l'on réalise le sensitogramme en exposant l'émulsion photographique à travers l'ouverture d'un masque, cette ouverture ayant au moins approximativement la forme d'un triangle rectangle, dont l'hypoténuse représente un escalier dont les marches ont une longueur variable, successivement à la lumière d'au moins trois sources lumineuses émettant chacune une lumière correspondant à une parmi trois couleurs primaires pour effectuer au moins trois luminations successives et en ce que l'on déplace relativement et en continu le masque par rapport à l'émulsion pendant chacune des expositions.

5. Procédé selon la revendication 1, caractérisé en ce que l'on enregistre les résultats de l'analyse densitométrique dans une unité de mémorisation électronique.

6. Dispositif pour reproduire, par synthèse contrôlée de couleurs sur une émulsion photographique donnée, au moins une surface colorée dont la couleur correspond à une référence sélectionnée sur un nuancier, comportant une unité d'exposition (11) équipée de trois sources lumineuses (12-15) correspondant à trois couleurs primaires, et un densitomètre pour la mise en oeuvre du procédé selon l'une quelconque des revendications 1 à 5, caractérisé en ce qu'il comporte également un sensitomètre (16) équipé d'un plateau (17) portant un substrat (18) revêtu de cette émulsion photographique, d'un masque (19) et d'organes mécaniques (21) pour déplacer relativement ce masque (19) et le substrat (18), une mémoire électronique pour enregistrer le fichier analytique des couleurs d'un sensitogramme réalisée sur ladite émulsion photographique au moyen dudit sensitomètre (16), ce sensitogramme étant analysé au moyen du densitomètre, et une unité centrale de commande (22) équipée d'un clavier (25) de sélection des références du nuancier, d'organes de calcul de la durée de chacune des expositions à une couleur primaire en fonction des données du fichier analytique, et d'organes de commande de l'unité d'exposition.

7. Dispositif selon la revendication 6, caractérisé en ce que le masque (19) est constitué par une plaque mobile selon deux directions orthogonales par rapport au substrat (18), pourvue d'une ouverture (20) correspondant à une plage de couleurs du sensitogramme, et en ce que le sensitomètre (16) comporte des organes (21) commandés par l'unité centrale de commande (22) pour assurer le déplacement séquentiel de cette plaque selon l'une ou l'autre des deux directions orthogonales.

8. Dispositif selon la revendication 6, caractérisé en ce que le masque (19) est constitué par une plaque mobile selon la direction axiale par rapport au substrat (18), cette plaque étant pourvue d'une ouverture (20) ayant au moins approximativement la forme d'un triangle rectangle dont l'hypoténuse représente un escalier dont les marches ont une longueur variable, et en ce que le sensitomètre comporte des organes (21) commandés par l'unité centrale de commande (22) pour assurer le déplacement relatif en continu du masque (19) par rapport à l'émulsion.

9. Dispositif selon l'une quelconque des revendications 6 à 8, caractérisé en ce que l'unité d'exposition (11) comporte une lampe électrique (12) et trois filtres (13,14,15) correspondant aux trois couleurs primaires, ces filtres étant agencés pour être amenés successivement sous cette lampe, et un obturateur commandé par l'unité centrale de commande pour déterminer la durée de chaque exposition.

10. Dispositif selon l'une quelconque des revendications 6 à 8, caractérisé en ce que l'unité d'exposition (11) comporte trois sources lumineuses émettant chacune une lumière correspondant à une des trois couleurs primaires.

**Patentansprüche**

1. Verfahren, um bei einer gegebenen fotografischen Emulsion über einen kontrollierten Farbenaufbau mindestens eine Farb-Fläche zu reproduzieren, deren Farbe einem über ein Farbschattierungsmuster ausgewählten Muster entspricht, dadurch gekennzeichnet, daß man im Verlauf eines ersten Arbeitsganges bei einer mit der fotografischen Emulsion identischen fotografischen Emulsion einen mit Hilfe von Entwicklungspräparaten entwickelten Empfindlichkeitsverlauf der ermittelten Charakteristiken aufzeichnet und eine Schwärzungsmessung von diesem Empfindlichkeitsverlauf macht, um eine analytische Datensammlung der Farben aufzustellen, aus denen sich der Empfindlichkeitsverlauf für die Emulsion und die Entwicklungspräparate zusammensetzt, und daß man im Verlauf eines zweiten Arbeitsganges die Belichtungsbedingungen für die gegebene fotografische Emulsion bestimmt, und zwar auf Basis des auf dem Farbschattierungsmuster ausgewählten Musters und der Ergebnisse der Schwärzungsmessung des Empfindlichkeitsverlaufes, um die besagte Farbfläche zu reproduzieren.

2. Verfahren nach Anspruch 1, dadurch gekennzeichnet, daß man den Empfindlichkeitsverlauf durch variable Belichtungszeit erstellt.

3. Verfahren nach Anspruch 1, dadurch gekennzeichnet, daß man den Empfindlichkeitsverlauf erstellt, indem man die fotografische Emulsion einer Lichtquelle aussetzt, die ein Licht entsprechend einer von drei Grundfarben durch die Öffnung einer Maske aussendet, deren Form derjenigen eines Bereiches des Empfindlichkeitsverlaufes entspricht, um mindestens eine Belichtung zu machen, um einen ersten Farbbereich zu erstellen, und daß man die Maske oder die Emulsion schrittweise verschiebt, wobei man die Belichtung und die Wahl der einen oder mehreren Grundfarben variiert, um die aufeinanderfolgenden Farbbereiche des Empfindlichkeitsverlaufes zu erstellen.

4. Verfahren nach Anspruch 1, dadurch gekennzeichnet, daß man den Empfindlichkeitsverlauf erstellt, indem man die fotografische Emulsion durch die Öffnung einer Maske nacheinander dem Licht von mindestens drei Lichtquellen aussetzt, wobei diese Öffnung wenigstens ungefähr die Form eines rechtwinkligen Dreiecks aufweist, dessen Hypotenuse eine Treppe darstellt, wobei die Stufen eine variable Länge haben, dabei soll jede Lichtquelle ein Licht aussenden, das einer von drei Grundfarben entspricht, um mindestens drei aufeinanderfolgende Belichtungen zu machen, und daß man die Maske bezüglich der Emulsion während jeder Belichtung vergleichsweise und fortlaufend verschiebt.

5. Verfahren nach Anspruch 1, dadurch gekennzeichnet, daß man die Ergebnisse der Schwärzungsmessung in einen elektronischen Speicher eingibt.

6. Einrichtung zum Reproduzieren von mindestens einer Farbfläche, über einen kontrollierten Farbaufbau auf einer gegebenen fotografischen Emulsion, deren Farbe einem auf einem Farbschattierungsmuster ausgewählten Muster entspricht, bestehend aus einem Belichtungsgerät (11), ausgerüstet mit drei Lichtquellen (12-15), welche drei Grundfarben entsprechen, und einem Schwärzungsmesser zur Anwendung des Verfahrens nach einem der Ansprüche 1-5, dadurch gekennzeichnet, daß sie ebenfalls einen Empfindlichkeitsmesser (16) aufweist, ausgestattet mit einer Unterlage (17), die eine mit dieser fotografischen Emulsion beschichtete Platte (18) trägt, mit einer Maske (19) und mechanischen Organen (21) um diese Maske (19) und die beschichtete Platte (18) relativ zu verschieben, einem elektronischen Speicher, um die Datensammlung über die Farben eines mit Hilfe des Empfindlichkeitsmessers (16) auf besagter fotografischen Emulsion aufgenommenen Empfindlichkeitsverlaufes aufzuzeichnen, wobei dieser Empfindlichkeitsverlauf mit Hilfe des Schwärzungsmessers analysiert ist und eine zentrale Steuereinheit (22), ausgestattet mit einer Tastatur (25) für die Auswahl der Muster aus dem Farbschattierungsmuster, mit Einrichtungen zur Berechnung der Dauer jeder Belichtung bei einer Grundfarbe in Abhängigkeit von den Eingaben im Datenspeicher, und mit Bedienungseinrichtungen für das Belichtungsgerät.

7. Einrichtung nach Anspruch 6, dadurch gekennzeichnet, daß die Maske (19) aus einer Platte besteht, die in zwei bezüglich der beschichteten Platte (18) senkrecht zueinander stehenden Richtungen beweglich ist, dabei ist sie mit einer Öffnung (20) versehen, welche einem Farbbereich des Empfindlichkeitsverlaufes entspricht, und daß der Empfindlichkeitsmesser (16) Organe (21) aufweist, die von der zentralen Steuereinheit (22) bewegt werden, um die schrittweise Verschiebung dieser Platte entlang der einen oder der anderen der beiden rechtwinklig zueinander stehenden Richtungen zu gewährleisten.

8. Einrichtung nach Anspruch 6, dadurch gekennzeichnet, daß die Maske (19) aus einer Platte besteht, die bezüglich der beschichteten Platte (18) in axialer Richtung beweglich ist und die mit einer Öffnung (20) versehen ist, welche wenigstens ungefähr die Form eines rechtwinkligen Dreieckes aufweist, dessen Hypotenuse einer Treppe gleicht, deren Stufen eine verschiedene Länge haben, und daß der Empfindlichkeitsmesser Organe (21) aufweist, die von der zentralen Steuereinheit (22) bewegt werden, um bezüglich der Emulsion die fortlaufende relative Verschiebung der Maske (19) zu gewährleisten.

9. Einrichtung nach irgendeinem der Ansprüche 6-8, dadurch gekennzeichnet, daß das Belichtungsgerät (11) eine elektrische Lampe (12) und drei, den drei Grundfarben entsprechende Filter (13, 14, 15) aufweist, wobei diese Filter so angeordnet sind, daß sie nacheinander unter diese Lampe gebracht werden können, desweiteren einen Verschluß, der von der zentralen Steuereinheit einzustellen ist, um die Dauer jeder Belichtung zu bestimmen.

10. Einrichtung nach einem der Ansprüche 6-8, dadurch gekennzeichnet, daß das Belichtungsgerät (11) drei Lichtquellen aufweist, wovon jede ein Licht entsprechend einer der drei Grundfarben aussendet.

## Claims

1. Method for reproducing by controlled synthesis of colors on a given photographic emulsion at least one colored surface, the color of which corresponds to a reference chosen from a color chart, characterized in that during a first stage there is recorded, on a photographic emulsion of the same type, a sensitogram developed with developing materials of predetermined characteristics, a densitometric analysis of said developed sensitogram is made so as to establish an analytical record of the colors comprising the sensitogram respecting the photographic emulsion and the developing materials used, and in that during a second stage, the exposure conditions for the photographic emulsion are determined to reproduce the said color surface on base of said reference chosen from the color chart and the results of said densitometric analysis of the sensitogram.

2. Method according to claim 1, characterized in that the sensitogram is made by variable time exposure.

3. Method according to claim 1, characterized in that the sensitogram is made by exposing the photographic emulsion to a light source emitting a light through an opening in a slide, corresponding to one of three primary colors, the shape of which opening corresponding to an area of the sensitogram in order to effect at least one exposure, and to attain a first area of color, and in that the slide or the emulsion are sequentially displaced while varying the exposure and the choice of the light source or filter for the primary colors to attain areas of successive colors on the sensitogram.

4. Method according to claim 1, characterized in that the sensitogram is made by successively exposing the photographic emulsion through an opening in a slide to a light having at least three light sources, said opening being at least approximately shaped like a right-angled triangle, the hypotenuse of which is in the form of a stairway with steps of varying lengths, each one emitting light corresponding to one of three primary colors to effect at least three successive illuminations, and in that the slide is continuously relatively displaced with respect to the emulsion during each of these exposures.

5. Method according to claim 1, characterized in that the results of the densitometric analysis are stored in an electronic memory unit.

6. Apparatus for reproducing by controlled synthesis of colors on a given photographic emulsion at least one colored surface, the color of which corresponds to a reference chosen from a color chart comprising an exposure unit (11) provided with three light sources (12-15) corresponding to three primary colors and a densitometer for use with the method of any one of claims 1 to 5, characterized in that it also comprises a sensitometer (16) equipped with a platform (17) supporting a substrate (18) coated with photographic emulsion, a slide (19) and mechanical means (21) for the relative displacement of said slide (19) and the substrate (18), an electronic memory to store the analytical record of the colors of the sensitogram made on said photographic emulsion with said sensitometer (16), this sensitogram being analyzed with the densitometer, and a central control unit (22) provided with a keyboard (25) for selecting the references from the color chart, means for calculating the length of each of the exposures to a primary color as a function of the information from the analytical record, and control means for the exposure unit.

7. Apparatus according to claim 6, characterized in that the slide (19) is comprised of a plate movable in two orthogonal directions in relation to the substrate (18), is provided with an opening (20) corresponding to one area of colors

5

of the sensitogram, and in that the sensitometer (16) comprises a means (21) governed by the central control unit (22) to ensure the sequential displacement of said plate in one or the other of the two orthogonal directions.

8. Apparatus according to claim 6, characterized in that the slide (19) is comprised of a plate axially movable in relation to the substrate (18), said plate being provided with an opening (20) having the approximate shape of a right-angled triangle, the hypotenuse of which is shaped like a stairway with steps of varying lengths, and in that the sensitometer comprises a means (21) governed by the central control unit (22) to ensure the continuous relative displacement of the slide (19) with respect to the emulsion.

9. Apparatus according to any one of claims 6 to 8, characterized in that the exposure unit (1 1) comprises an electric light (12) and three filters (13, 14, 15) corresponding to the three primary colors, said filters being disposed to pass successively under said lamp, and a shutter means governed by the central control unit to determine the length of each exposure.

10. Apparatus according to any one of claims 6 to 8, characterized in that the exposure unit (11) comprises three light sources each emitting a light corresponding to one of the three primary colors.

FIG. 1

FIG. 2